# EUROPÄISCHE PATENTSCHRIFT

(11) **EP 3 406 890 B1**
(45) Veröffentlichungstag und Bekanntmachung des Hinweises auf die Patenterteilung: **18.12.2019**
(21) Anmeldenummer: 18171436.1
(22) Anmeldetag: 09.05.2018
(51) Int. Cl.: F02M 35/10, F02M 35/104, F02M 35/12

(54) **WÄRMEISOLIERTES LUFTEINLASSSYSTEM FÜR EINEN VERBRENNUNGSMOTOR**
HEAT-INSULATED AIR INTAKE SYSTEM FOR COMBUSTION ENGINE
SYSTÈME D'ADMISSION D'AIR ISOLÉ THERMIQUEMENT POUR UN MOTEUR À COMBUSTION INTERNE

(30) Priorität: 23.05.2017 DE 102017111262
(43) Veröffentlichungstag der Anmeldung: 28.11.2018
(73) Patentinhaber: MAN Truck & Bus SE, 80995 München (DE)
(72) Erfinder: Dietrich, Jens, 91560 Heilsbronn (DE); Malischewski, Thomas, 91560 Heilsbronn (DE); Tilinski, Marco, 90552 Röthenbach a. d. Pegnitz (DE); Hirschmann, Steffen, 91413 Neustadt an der Aisch (DE)
(74) Vertreter: v. Bezold & Partner Patentanwälte - PartG mbB

(56) Entgegenhaltungen:
- DE-A1-102007 045 634
- GB-A- 1 473 168
- JP-A- S5 486 014

## Beschreibung

Die Erfindung betrifft ein Lufteinlasssystem für einen Verbrennungsmotor und Verfahren zur Herstellung eines Lufteinlasssystems.

Den Verbrennungskammern eines Verbrennungsmotors wird Frischluft zur Verbrennung des Kraftstoffs über ein Lufteinlasssystem zugeführt. Das Lufteinlasssystem weist verschiedene Luftströmungskanäle auf. Hierzu zählt der Einlasskanal im Zylinderkopf, der in die Verbrennungskammer mündet. Stromaufwärts des Einlasskanals ist ein Luftzufuhrkanal angeordnet, der beispielsweise die Einlassluft zu einem oder mehreren Zylindern verteilen kann. Das Lufteinlasssystem kann weitere Komponenten, wie beispielsweise einen Verdichter und einen Ladeluftkühler aufweisen.

Beim Betrieb des Verbrennungsmotors erwärmt sich der Verbrennungsmotor. Insbesondere erwärmt sich der auf die Verbrennungskammern montierte Zylinderkopf. Es ist wünschenswert, dass die Einlassluft beim Einströmen in die Verbrennungskammern eine niedrige Temperatur und somit eine hohe Dichte aufweist. Die Einlassluft kann sich beispielsweise beim Verdichten durch einen Verdichter oder durch eine Wärmeübertragung von dem im Betrieb erwärmten Zylinderkopf erwärmen.

Die US 4,300,494 A offenbart einen Ottomotor mit verringertem Kraftstoffverbrauch. Der Verbrennungsmotor weist einen Einlasskanal im Zylinderkopf auf, der mit einem wärmeisolierenden Material beschichtet ist
Die DE 40 06 583 A1 offenbart einen Dieselmotor. Ein Ansaugkanal im Zylinderkopf des Dieselmotors ist mit einer wärmeisolierenden Auskleidung versehen, die aus einem Keramikmaterial besteht.

Die JP2016118132 (A) offenbart ein Wärmeisolationselement für einen Ansaugkanal in einem Zylinderkopf eines Verbrennungsmotors.

Die bekannten Maßnahmen können unzureichend sein, sodass die Frischluft noch immer mit einer zu hohen Temperatur in die Verbrennungskammern des Verbrennungsmotors einströmt.

Die GB 1 473 168 A offenbart einen Zylinderkopf und eine Zylinderkopfhaube. Die Zylinderkopfhaube weist auf ihrer dem Zylinderkopf zugewandten Innenseite ihre Oberfläche vergrößernde Versteifungsrippen auf, die die Wärmeabfuhr aus dem Zylinderkopf vorteilhaft beeinflussen. An der Zylinderkopfhaube sind Einzelsaugrohre und ein Sammelsaugrohr angeformt. Damit eine zu starke Erwärmung der Ansaugluft vermieden wird, können die Innenwandlungen des Sammelsaugrohres bzw. der Einzelsaugrohre beschichtet sein.

Die JP S54 86014 A offenbart eine Keramikbeschichtung auf einer Innenwandung eines Saugrohres einer Verbrennungskraftmaschine.

Der Erfindung liegt daher die Aufgabe zu Grunde, ein Lufteinlasssystem vorzusehen, das die Zuführung von kühler Frischluft zu den Verbrennungskammern eines Verbrennungsmotors ermöglicht.

Die Aufgabe wird gelöst durch ein Lufteinlasssystem gemäß dem unabhängigen Anspruch. Herstellungsverfahren für das Lufteinlasssystem gemäß den unabhängigen Ansprüchen sind ebenfalls offenbart. Vorteilhafte Weiterbildungen sind in den abhängigen Ansprüchen und der Beschreibung angegeben.

Das Lufteinlasssystem weist einen Zylinderkopf mit einem Einlasskanal zum Einleiten von Einlassluft in eine Verbrennungskammer des Verbrennungsmotors auf. Das Lufteinlasssystem weist ferner ein Luftzufuhrrohrstück, das mit dem Zylinderkopf verbunden ist und mindestens teilweise einen Luftzufuhrkanal, der in den Einlasskanal mündet, ausbildet, auf. Zudem ist eine Wärmeisolierung in dem Luftzufuhrkanal zur Verringerung einer Wärmeübertragung auf die in dem Luftzufuhrkanal strömende Einlassluft angeordnet. Durch Anordnung der Wärmeisolierung kann eine Erwärmung der Einlassluft beim Durchströmen des Luftzufuhrkanals verringert werden. Aufgrund der verringerten Erwärmung der Einlassluft reduziert sich die Dichte der Einlassluft nicht wesentlich. Somit kann mehr Einlassluft in die Verbrennungskammer strömen. Dies kann den Wirkungsgrad des Verbrennungsmotors erhöhen und somit dabei helfen, weniger Kraftstoff zu verbrauchen.

Das Luftzufuhrrohrstück kann als Luftverteilerrohrstück zur Verteilung der Einlassluft auf mehrere Zylinder des Verbrennungsmotors ausgebildet sein.

Der Luftzufuhrkanal ist stromaufwärts des Einlasskanals angeordnet.

Die Wärmeisolierung liegt an einer Innenwandfläche des Luftzufuhrkanals an.

Das Luftzufuhrrohrstück kann ein offenes Profil, zum Beispiel ein U-Profil, aufweisen.

Die Wärmeisolierung kann aus einem abgasfesten Material hergestellt sein, sodass beispielsweise in Ausführungsformen mit Abgasrückführung keine Beeinträchtigung der Wärmeisolierung durch das Abgas auftritt.

Das Lufteinlasssystem kann einen Verdichter und/oder einen Ladeluftkühler stromaufwärts des Luftzufuhrrohrstücks aufweisen.

Der Zylinderkopf kann ein Einzylinder-Zylinderkopf oder ein Mehrzylinder-Zylinderkopf sein.

In einer Ausführungsvariante sind das Luftzufuhrrohrstück und die Wärmeisolierung aus unterschiedlichen Materialien hergestellt. Das Luftzufuhrrohrstück kann insbesondere aus einer Metalllegierung, vorzugsweise einer Aluminiumlegierung, hergestellt sein. Alternativ oder ergänzend kann die Wärmeisolierung insbesondere aus einem Kunststoff, einem Gummi und/oder einem Silikon hergestellt sein. Damit kann das Luftzufuhrrohrstück beispielsweise aus einer tragfähigen Metalllegierung hergestellt sein, die eine hohe Wärmeleitfähigkeit aufweist. Dagegen kann die Wärmeisolierung aus einem Material hergestellt sein, das eine niedrige Wärmeleitfähigkeit aufweist.

Insbesondere kann die Wärmeisolierung eine Wärmeleitfähigkeit aufweisen, die kleiner als eine Wärmeleitfähigkeit einer Außenwand des Luftzufuhrrohrstücks ist.

In einer weiteren Ausführungsvariante weist die Wärmeisolierung eine Wärmeleitfähigkeit kleiner als 1 W/(m·K), insbesondere kleiner als 0,5 W/(m·K), vorzugsweise kleiner als 0,1 W/(m·K), auf. Damit kann eine Wärmeübertragung auf die in dem Luftzufuhrkanal strömende Einlassluft deutlich verringert werden.

In einem Ausführungsbeispiel ist das Luftzufuhrrohrstück an den Zylinderkopf montiert, insbesondere angeschraubt. Alternativ sind das Luftzufuhrrohrstück und der Zylinderkopf integral miteinander aus einem Stück ausgebildet und bilden insbesondere ein integrales Gussteil. Die vorgeschlagene Wärmeisolierung ist somit sowohl in Ausführungsformen mit anmontiertem Luftzufuhrrohrstück als auch in Ausführungsformen mit angegossenem Luftzufuhrrohrstück verwendbar.

Erfindungsgemäß weist die Wärmeisolierung einen Einsatz, insbesondere einen Liner, auf. Der Einsatz liegt an einer Innenwandfläche des Luftzufuhrkanals an. Ergänzend kann der Einsatz insbesondere eine Klebeschicht zum Ankleben des Einsatzes an die Innenwandfläche des Luftzufuhrkanals aufweisen.

In einer Weiterbildung ist der Einsatz als ein flexibler, insbesondere faltbarer, Einsatz ausgebildet. Dies kann eine Montage des Einsatzes im Luftzufuhrkanal erleichtern.

In einer vorteilhaften Weiterbildung ist der Einsatz durch ein 3D-Druckverfahren hergestellt. Damit können auch komplexe Geometrie und filigrane Strukturen des Einsatzes zum Nachbilden einer Innenkontur des Luftzufuhrkanals mit vertretbarem Aufwand hergestellt werden.

Vorteilhafterweise wirkt der Einsatz zusätzlich als eine Dichtung an einem Übergang zwischen dem Zylinderkopf und dem Luftzufuhrrohrstück. Insbesondere bei Ausführungsformen, bei denen das Luftzufuhrrohrstück an den Zylinderkopf montiert ist, kann eine Abdichtung zwischen dem Luftzufuhrrohrstück und dem Zylinderkopf durch den Einsatz verbessert werden.

In einer Ausführungsform weist die Wärmeisolierung eine Beschichtung auf. Die Beschichtung ist auf eine Innenwandfläche des Luftzufuhrkanals aufgebracht. Beispielsweise kann die Beschichtung durch ein Aufspritzverfahren aufgebracht sein. Die Beschichtung kann ergänzend zu dem Einsatz (Liner) vorgesehen sein. Die Beschichtung und der Einsatz können nebeneinander oder übereinander vorgesehen sein.

In einer Weiterbildung ist die Wärmeisolierung zusätzlich dazu ausgebildet ist, ein Ansauggeräusch, das im Betrieb des Verbrennungsmotors im Luftansaugkanal auftritt, zu dämpfen und/oder den Ansaugkanal akustisch zu dämmen. Dazu kann die Wärmeisolierung bspw. dazu ausgebildet sein, eine (bspw. erhöhte oder erhebliche) Reflexion des Luftschalls im Luftansaugkanal zu bewirken (Dämmung) oder eine Schallintensität durch Absorption zu verringern (Dämpfung). Dies kann insbesondere dazu führen, dass ein außerhalb des Luftzufuhrrohrstücks wahrgenommenes Geräusch in einer Lautstärke vermindert und/oder in einem Frequenzbereich verändert wird. Die akustische Wirkung kann insbesondere durch eine Form und/oder ein Material/Materialmix der Wärmeisolierung bewirkt werden.

In einer weiteren Ausführungsform ist die Wärmeisolierung zusätzlich in dem Einlasskanal des Zylinderkopfes angeordnet. Die Wärmeisolierung im Einlasskanal kann eine Beschichtung einer Innenwandfläche des Einlasskanals und/oder einen an der Innenwandfläche anliegenden, insbesondere flexiblen, vorzugsweise faltbaren, Einsatz, beispielsweise einen Liner, aufweisen. Dies hat den Vorteil, dass eine Erwärmung der Einlassluft nicht nur im Luftzufuhrkanal sondern auch im Einlasskanal verringert werden kann.

Der Einlasskanal ist insbesondere gekrümmt. Der Einlasskanal öffnet sich zur Verbrennungskammer. Eine Brennraumöffnung des Einlasskanals kann von einem Hubventil (Tellerventil) verschließbar sein.

Der Luftzufuhrkanal kann im Wesentlichen gradlinig verlaufen. Der Luftzufuhrkanal (das Luftzufuhrrohrstück) kann insbesondere entlang einer Reihe von nebeneinander angeordneten Zylindern des Verbrennungsmotors verlaufen.

Der Luftzufuhrkanal kann als ein Luftzufuhrverteilungskanal mit einer Mehrzahl von Auslässen für eine Mehrzahl von Einlasskanälen ausgebildet sein. Die Einlasskanäle können zu der gleichen oder insbesondere zu mehreren Verbrennungskammern des Verbrennungsmotors führen.

Das Luftzufuhrrohrstück ist insbesondere als tragendes Element und/oder als ein Gussteil, vorzugsweise ein Metallgussteil, zum Anmontieren eines oder mehrerer Komponenten des Verbrennungsmotors ausgebildet.

In einem Ausführungsbeispiel bildet der Zylinderkopf den Luftzufuhrkanal teilweise aus. Der Zylinderkopf bildet insbesondere einen in den Einlasskanal mündenden Auslassbereich des Luftzufuhrkanals aus. Alternativ bildet das Luftzufuhrrohrstück den Luftzufuhrkanal vollständig aus.

Die Wandstärke der Wärmeisolierung kann so gewählt sein, dass eine ausreichende thermische Isolierung der Einlassluft im Luftzufuhrkanal gewährleistet ist. Die Wandstärke des Luftzufuhrrohrstücks kann so gewählt sein, dass eine tragende Funktion des Luftzufuhrrohrstücks gewährleistet ist.

In einem weiteren Ausführungsbeispiel definieren die Wärmeisolierung und das Luftzufuhrrohrstück eine gemeinsame Wandstärke des Luftzufuhrkanals. Die Wärmeisolierung weist eine Wandstärke in einem Bereich kleiner als 50 % der gemeinsamen Wandstärke, insbesondere zwischen 30 % und 40 % der gemeinsamen Wandstärke, auf. Damit kann einerseits eine gute Wärmeisolierung erreicht und andererseits eine tragende Funktion des Luftzufuhrrohrstücks ermöglicht werden.

Die Wärmeisolierung kann bspw. eine Dicke von ungefähr 3 mm, vorzugsweise kleiner als 3 mm aufweisen.

Die Erfindung betrifft ferner ein Kraftfahrzeug, insbesondere Nutzfahrzeug, mit einem Lufteinlasssystem wie hierin offenbart.

Die Erfindung betrifft zudem ein Verfahren zur Herstellung eines Lufteinlasssystems eines Verbrennungsmotors. Das Verfahren weist das Gießen eines Zylinderkopfes mit einem Einlasskanal und einem angegossenen Luftzufuhrrohrstück auf. Das Luftzufuhrrohrstück bildet mit dem Zylinderkopf einen Luftzufuhrkanal, der in den Einlasskanal mündet, aus. Der Einlasskanal weist eine Brennraumöffnung auf und der Luftzufuhrkanal weist eine Eintrittsöffnung für Einlassluft auf. Das Verfahren weist ferner das Einführen einer Wärmeisolierung, die einen gefalteten Einsatz, insbesondere einen Liner, aufweist, durch die Brennraumöffnung oder die Eintrittsöffnung in den Luftzufuhrkanal auf. Das Verfahren weist zudem das Entfalten des Einsatzes in dem Luftzufuhrkanal auf, sodass der Einsatz sich an eine Innenwandfläche des Luftzufuhrkanals anlegt.

Somit kann eine Wärmeisolierung in einem angegossenen Luftzufuhrrohrstück angeordnet werden.

Zusätzlich betrifft die Erfindung ein weiteres Verfahren zur Herstellung eines Lufteinlasssystems eines Verbrennungsmotors. Das Verfahren weist das Gießen eines Luftzufuhrrohrstücks zum Montieren an einen Zylinderkopf auf. Das Luftzufuhrrohrstück ist so montierbar, dass ein mindestens teilweise durch das Luftzufuhrrohrstück gebildeter Luftzufuhrkanal in einen Einlasskanal des Zylinderkopfes mündet. Das Verfahren weist das Einlegen oder Einführen eines Einsatzes, insbesondere eines Liner, als eine Wärmeisolierung in den Luftzufuhrkanal auf. Das Verfahren weist zudem das Montieren des Luftzufuhrrohrstücks an den Zylinderkopf auf.

Somit kann eine Wärmeisolierung auf verschiedene Weisen in einem anmontierten Luftzufuhrrohrstück angeordnet werden.

Das Montieren des Luftzufuhrrohrstücks kann insbesondere vor dem Einführen des Einsatzes, nach dem Einlegen des Einsatzes oder nach dem Beschichten einer Innenwandfläche stattfinden. Der Einsatz kann beispielsweise gefaltet in den Luftzufuhrkanal durch eine Eintrittsöffnung des Luftzufuhrkanals oder eine Brennraumöffnung des Einlasskanals eingeführt und in dem Luftzufuhrkanal entfaltet werden.

Die Verfahren zur Herstellung eines Lufteinlasssystems können das hierin offenbarte Lufteinlasssystem herstellen.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische Ansicht eines Zylinderkopfes mit anmontiertem Luftzufuhrrohrstück;
- Figur 2A: eine perspektivische Ansicht des Zylinderkopfes;
- Figur 2B: eine perspektivische Ansicht des Luftzufuhrrohrstücks;
- Figur 3: eine Schnittansicht durch den Zylinderkopf und das Luftzufuhrrohrstück in einer ersten beispielhaften Ausführungsform;
- Figur 4: eine Schnittansicht durch den Zylinderkopf und das Luftzufuhrrohrstück in einer zweiten beispielhaften Ausführungsform;
- Figur 5: eine Schnittansicht durch den Zylinderkopf und das Luftzufuhrrohrstück in einer dritten beispielhaften Ausführungsform; und
- Figur 6: eine Schnittansicht durch einen Zylinderkopf und ein Luftzufuhrrohrstück in einer vierten beispielhaften Ausführungsform.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

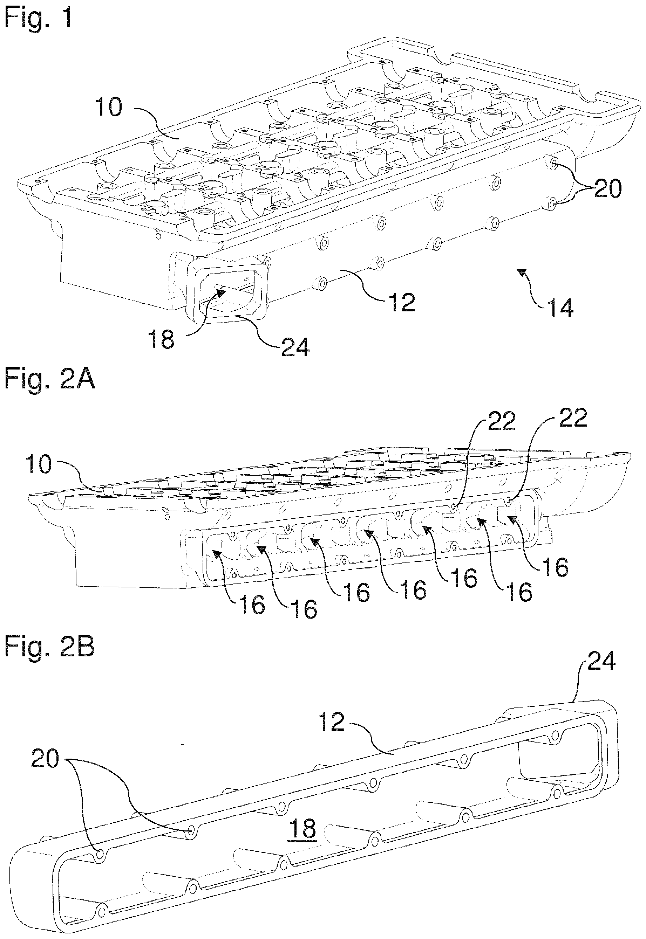

Die Figur 1 zeigt einen Zylinderkopf 10 und ein Luftzufuhrrohrstück 12 eines nicht näher dargestellten Verbrennungsmotors. Der Verbrennungsmotor kann beispielsweise zum Antreiben eines Nutzfahrzeugs verwendet werden. Das Nutzfahrzeug kann insbesondere ein Omnibus oder ein Lastkraftwagen sein. Das Luftzufuhrrohrstück 12 ist mit dem Zylinderkopf 10 verbunden. Der Zylinderkopf 10 und das Luftzufuhrrohrstück 12 bilden ein Lufteinlasssystem 14. Das Lufteinlasssystem 14 kann ein Ladeluftsystem oder ein Ansaugsystem sein. In der Figur 2A ist der Zylinderkopf 10 ohne Luftzufuhrrohrstück 12 dargestellt. In der Figur 2B ist das Luftzufuhrrohrstück 12 ohne den Zylinderkopf 10 dargestellt.

Der Zylinderkopf 10 kann zum Abdichten eines oder mehrerer Zylinder auf einen Motorblock eines Verbrennungsmotors (nicht dargestellt) montiert werden. In der dargestellten Ausführungsform ist der Zylinderkopf 10 ein Mehrzylinder-Zylinderkopf, der auf eine Mehrzahl von nebeneinander angeordneten Zylindern montierbar ist. Alternativ kann der Zylinderkopf auch als ein Einzylinder-Zylinderkopf für einen einzelnen Zylinder ausgebildet sein.

Wie in Figur 2A dargestellt ist, weist der Zylinderkopf 10 eine Mehrzahl von Einlasskanälen 16 auf, die im montierten Zustand zu Verbrennungskammern des Verbrennungsmotors führen.

Durch die Einlasskanäle 16 wird Einlassluft (Frischluft) zu den Verbrennungskammern zugeführt. In einigen Ausführungsformen kann durch die Einlasskanäle 16 zusätzlich rückgeführtes Abgas und/oder ein Luft-Kraftstoffgemisch in die Verbrennungskammern geleitet werden.

Die Einlassluft wird durch einen Luftzufuhrkanal 18 (siehe Figuren 1 und 2B) zu den Einlasskanälen 16 geleitet. Der Luftzufuhrkanal 18 mündet in die Einlasskanäle 16. Das Luftzufuhrrohrstück 12 kann über eine Mehrzahl von Schraubverbindungen an den Zylinderkopf 10 montiert werden. Im Einzelnen können Schrauben (nicht dargestellt) durch Schraubenbohrungen 20 in dem Luftzufuhrrohrstück 12 geführt und in entsprechende Aufnahmebohrungen 22 im Zylinderkopf 10 eingeschraubt werden. Aus Übersichtsgründen sind in den Figuren 1, 2A und 2B nur zwei Schraubenbohrungen 20 und zwei Aufnahmebohrungen 22 bezeichnet.

Der Luftzufuhrkanal 18 wird zwischen dem Zylinderkopf 10 und dem Luftzufuhrrohrstück 12 gebildet. Das Luftzufuhrrohrstück 12 weist hierzu ein offenes Profil, das mit einem offenen Profil am Zylinderkopf 10 zusammenpasst, auf. In der gezeigten Ausführungsform ist das offene Profil des Luftzufuhrrohrstücks 12 ein U-Profil. Je nach Anforderung und Bauraum sind jedoch auch andere Profilformen für das Luftzufuhrrohrstück 12 denkbar.

In anderen Ausführungsformen kann der Luftzufuhrkanal 18 vollständig von dem Luftzufuhrrohrstück 12 gebildet werden. Es ist ebenso möglich, dass das Luftzufuhrrohrstück 12 direkt an den Zylinderkopf 10 angegossen ist. Mit anderen Worten gesagt, kann der Zylinderkopf 10 gemeinsam mit dem Luftzufuhrrohrstück 12 in einem Gießvorgang als ein integrales Gussteil gegossen werden. Hier bildet der Zylinderkopf 10 beispielsweise einen in die Einlasskanäle 16 mündenden Auslassbereich des Luftzufuhrkanals 18 aus.

Der Luftzufuhrkanal 18 erstreckt sich im Wesentlichen gradlinig in einer Längsrichtung entlang (einer Längsrichtung) des Zylinderkopfes 10. Ein Verlauf des Luftzufuhrkanals 18 kann an die Anordnung von Peripheriebauteilen bspw. zum Umgehen der Peripheriebauteile angepasst sein. Der Luftzufuhrkanal 18 ist als Verteilungskanal ausgebildet. Von einer Eintrittsöffnung 24 wird die Einlassluft von dem Luftzufuhrkanal 18 zu der Mehrzahl von Einlasskanälen 16 geleitet. Die Eintrittsöffnung 24 kann sich an einem Ende des Luftzufuhrrohrstücks 12 und/oder an jeglicher Position zwischen beiden Enden des Luftzufuhrrohrstücks 12 angeordnet sein. Hierzu kann der Luftzufuhrkanal 18 eine Mehrzahl von Auslässen für die Mehrzahl von Einlasskanälen 16 aufweisen. Mit anderen Worten gesagt, kann das Luftzufuhrrohrstück 12 als ein Luftzufuhrverteilungsrohrstück ausgebildet sein.

Das Luftzufuhrrohrstück 12 ist als ein tragendes Element ausgebildet, an dem eines oder mehrere weitere Komponenten des Verbrennungsmotors montiert werden können. Das Luftzufuhrrohrstück 12 ist insbesondere aus einer Metalllegierung, zum Beispiel eine Aluminiumlegierung, hergestellt. Das Luftzufuhrrohrstück 12 kann ein Gussteil, zum Beispiel ein Druckgussteil, sein.

Das Lufteinlasssystem 14 kann zusätzlich einen Ladeluftkühler (nicht dargestellt) und/oder einen Verdichter (nicht dargestellt) aufweisen. Der Ladeluftkühler und der Verdichteter können stromaufwärts der Eintrittsöffnung 24 des Luftzufuhrrohrstücks 12 (des Luftzufuhrkanals 18) angeordnet sein. Der Verdichter kann Einlassluft verdichten und beispielsweise Teil eines Turboladers sein. Der Ladeluftkühler kann beispielsweise durch eine Verdichtung erwärmte Einlassluft beim Durchströmen abkühlen.

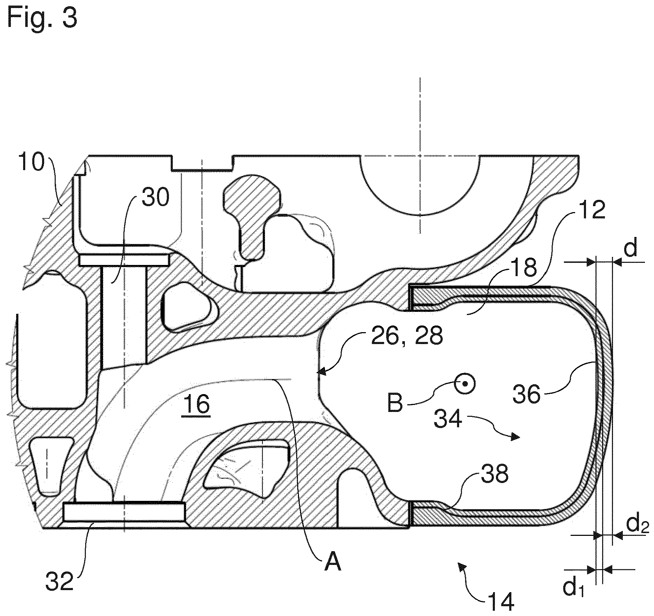

In den Figuren 3 bis 6 sind Schnittansichten durch unterschiedliche Ladeluftsysteme gemäß der vorliegenden Offenbarung dargestellt. Die Schnittebene ist dabei so gewählt, dass jeweils eine Mittelachse A des Einlasskanals 16 in der Schnittebene verläuft.

Die Figur 3 zeigt ein Ausführungsbeispiel, in dem der Zylinderkopf 10 und das Luftzufuhrrohrstück 12 separat ausgebildet sind. Insbesondere ist das Luftzufuhrrohrstück 12, wie obenstehend unter Bezugnahme auf die Figuren 1 bis 2B erläutert, an den Zylinderkopf 10 angeschraubt.

Der Luftzufuhrkanal 18 erstreckt sich gradlinig entlang einer Längsachse B. Die Längsachse B ist im Wesentlichen senkrecht zu der Mittelachse A des Einlasskanals 16. Insbesondere ist die Längsachse B im Wesentlichen senkrecht zu allen Mittelachsen A von mehreren Einlasskanälen 16.

Die in dem Luftzufuhrkanal 18 strömende Einlassluft strömt durch eine Auslassöffnung 26 des Luftzufuhrkanals 18 in eine Einlassöffnung 28 des Einlasskanals 16. Durch den gekrümmten Einlasskanal 16 strömt die Luft dann in einen Brennraum. Durch den Einlasskanal 16 kann sich teilweise ein Hubventil (nicht dargestellt), insbesondere ein Tellerventil, erstrecken. Das Hubventil ist in einer Aufnahme 30 gelagert und dient zum Öffnen und Verschließen einer Brennraumöffnung 32 des Einlasskanals 16.

In dem Luftzufuhrkanal 18 ist eine Wärmeisolierung 34 angeordnet. Die Wärmeisolierung 34 verringert eine Wärmeübertragung auf die durch den Luftzufuhrkanal 18 strömende Einlassluft.

Die Wärme stammt insbesondere von dem im Betrieb erwärmten Zylinderkopf 10 und der im Betrieb erwärmten Umgebungsluft des Verbrennungsmotors.

Die Wärmeisolierung 34 kann aus einem Kunststoff, zum Beispiel einem Thermoplast, einem Gummi und/oder einem Silikon hergestellt sein. Als Silikone kommen insbesondere Silikone für den Automobilbau infrage. Als Gummi kann beispielsweise FKM (Fluorkarbonkautschuk) oder FPM (Fluorpolymerkautschuk) verwendet werden.

Die Wärmeisolierung 34 ist insbesondere aus einem anderen Material als das Luftzufuhrrohrstück 12 ausgebildet. Während das Luftzufuhrrohrstück 12 aus einem tragfähigen Material wie beispielsweise einem Metall mit einer großen Wärmeleitfähigkeit ausgebildet ist, weist die Wärmeisolierung 34 eine sehr geringe Wärmeleitfähigkeit auf. Die Wärmeleitfähigkeit der Wärmeisolierung 34 ist zum Beispiel kleiner als 5 W/(m·K), insbesondere kleiner als 1 W/(m·K), vorzugsweise kleiner als 0,1 W/(m·K).

Die Wärmeisolierung 34 kann eine glatte Oberfläche aufweisen, um eine möglichst gleichmäßige Strömung durch den Luftzufuhrkanal 18 zu ermöglichen.

In der dargestellten, nicht erfindungsgemäßen Ausführungsform weist die Wärmeisolierung 34 eine Beschichtung 36 auf.

Die Beschichtung 36 bedeckt zumindest teilweise eine Innenwandfläche 38 des Luftzufuhrkanals 18 (Luftzufuhrrohrstücks 12). Die Beschichtung 36 kann beispielsweise über ein Aufspritzverfahren (z. B. ein Spritzgussverfahren) aufgebracht werden. In einem Aufspritzverfahren kann beispielsweise ein kohlenstofffaserverstärkter Thermoplast, zum Beispiel PA66-CF35, aufgebracht werden. Selbstverständlich sind auch andere Beschichtungsverfahren denkbar. Typischerweise wird die Beschichtung 36 vor der Montage des Luftzufuhrrohrstücks 12 an den Zylinderkopf 10 auf die Innenwandfläche 38 aufgebracht.

Im Bereich des Luftzufuhrrohrstücks 12 weist der Luftzufuhrkanal 18 eine Wandstärke d auf. Die Wandstärke d ergibt sich als Summe aus der Wandstärke (Dicke) d₁ der Beschichtung 36 (Wärmeisolierung 34) und der Wandstärke d₂ der Außenwand des Luftzufuhrrohrstücks 12. Die Wandstärke d₁ der Beschichtung 36 kann bspw. so dimensioniert sein, dass sie ungefähr in einem Bereich zwischen 30 % und 40 % der Wandstärke d ist. Die Wandstärke der Wärmeisolierung 34 ist insbesondere so gewählt, dass tatsächlich eine ausreichende wärmeisolierende Wirkung erzielt wird.

Untersuchungen haben gezeigt, dass derartige Wandstärken für die Wärmeisolierung (in Form eines Einsatzes oder einer Beschichtung) eine vergleichbare Wärmeisolierung wie Luftzufuhrrohrstücke, die bspw. vollständig aus Kunststoff gefertigt sind, ermöglichen. Diese Kunststoffzufuhrrohre können zwar eine gute Wärmeisolierung bieten, sind jedoch keine tragfähigen Bauteile, an die weitere Komponenten des Verbrennungsmotors montierbar sind.

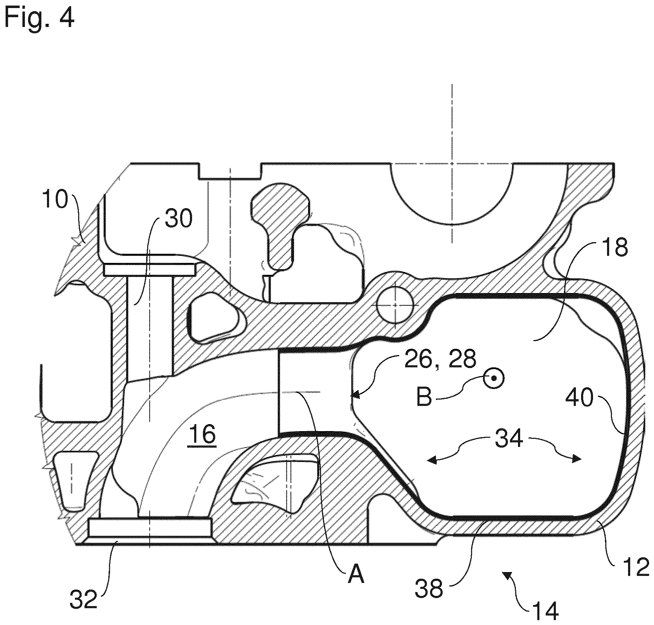

Die Figur 4 zeigt ein Ausführungsbeispiel, in dem der Zylinderkopf 10 und das Luftzufuhrrohrstück 12 einstückig als ein Gussteil ausgebildet sind. Das Luftzufuhrrohrstück 12 ist an den Zylinderkopf 10 angegossen. Insbesondere wurden das Luftzufuhrrohrstück 12 und der Zylinderkopf 10 in einem gemeinsamen Gießverfahren ausgebildet.

In der dargestellten Ausführungsform ist die Wärmeisolierung 34 als ein Einsatz 40 in Form eines Liners ausgebildet. Der Einsatz 40 ist in dem Luftzufuhrkanal 18 angeordnet und erstreckt sich in den Einlasskanal 16. Der Einsatz 40 liegt an der Innenwandfläche 38 an. Der Einsatz 40 kann einlagig oder mehrlagig ausgebildet sein. Der Einsatz 40 kann einteilig oder mehrteilig ausgebildet sein. In der dargestellten Ausführungsform erstreckt sich der Einsatz 40 teilweise in den Einlasskanal 16.

Der Einsatz 40 kann eine Klebeschicht (Klebelage) oder mehrere Klebestellen aufweisen, mit der der Einsatz 40 an der Innenwandfläche 38 angeklebt ist. Der Einsatz 40 kann auch durch ein anderes geeignetes Befestigungsmittel an der Innenwand befestigt werden. Es ist allerdings auch möglich, den Einsatz 40 ohne Klebeschicht oder Befestigungsmittel vorzusehen, zum Beispiel wenn der Einsatz 40 so ausgebildet ist, dass er sich gegen die Innenwandfläche 38 abstützen kann. Eine Außenkontur des Einsatzes 40 bildet eine Kontur der Innenwandfläche 38 nach und legt sich daher an die Innenwandfläche 38 an. Bei aufgeladenen Motoren herrscht im Normalmalbetrieb ein Überdruck im Luftzufuhrkanal 18. Der Überdruck drückt den Einsatz 40 an die Innenwandfläche 38 und verhindert ein ungewolltes Verrutschen des Einsatzes 40. Bei geschlossener Drosselklappe kann jedoch auch bei aufgeladenen Motoren ein Unterdruck im Luftzufuhrkanal 18 herrschen, sodass auch hier Vorkehrungen getroffen werden sollten, um ein Ablösen des Einsatzes von der Innenwandfläche zu verhindern.

Der Einsatz 40 kann flexibel sein, sodass er insbesondere faltbar ist. Der Einsatz 40 kann im gefalteten Zustand durch die Brennraumöffnung 32 oder die Eintrittsöffnung 24 (siehe Figur 1) in den Luftzufuhrkanal 18 eingeführt werden. Im Luftzufuhrkanal 18 kann der Einsatz 40 entfaltet werden und sich an die Innenwandfläche 38 anlegen.

Der Einsatz 40 kann auch in Ausführungsformen verwendet werden, in denen das Luftzufuhrrohrstück 12 an den Zylinderkopf 10 montiert ist. Hier kann der Einsatz 40 vor der Montage des Luftzufuhrrohrstücks 12 in das Luftzufuhrrohrstück 12 eingelegt werden. Es ist ebenso möglich, dass der Einsatz 40 nach der Montage des Luftzufuhrrohrstücks 12 durch die Brennraumöffnung 32 oder die Eintrittsöffnung 34 (siehe Figur 1) in den Luftzufuhrkanal 18 eingeführt wird.

In Ausführungsformen mit anmontiertem Luftzufuhrrohrstück 12 kann der Einsatz 40 zusätzlich so dimensioniert sein, dass er eine Schnittstelle (einen Übergang) zwischen dem Zylinderkopf 10 und dem Luftzufuhrrohrstück 12 überdeckt. So kann der Einsatz 40 zusätzlich als eine Dichtung zwischen dem Zylinderkopf 10 und dem Luftzufuhrrohrstück 12 dienen.

Der Einsatz 40 kann beispielsweise durch ein 3D-Druckverfahren hergestellt werden. In einem derartigen 3D-Druckverfahren kann der Einsatz 40 beispielsweise als thermoplastisches Polyurethan von einem 3D-Drucker gedruckt werden.

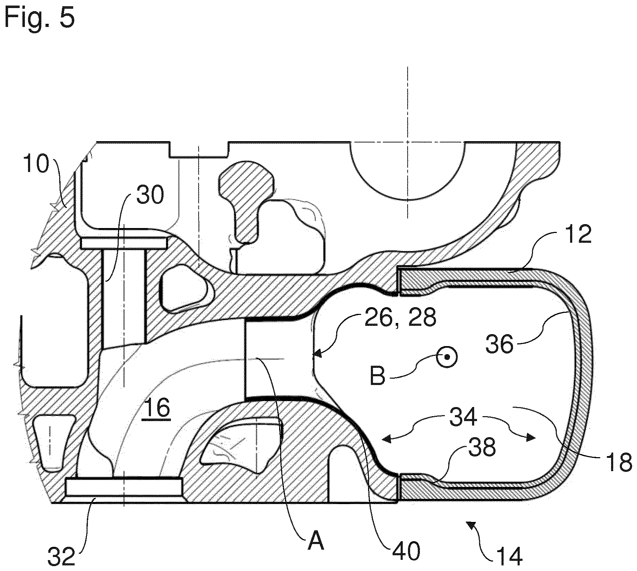

Die Figur 5 zeigt eine weitere Ausführungsform, in der die Wärmeisolierung 34 zusätzlich teilweise im Einlasskanal 16 angeordnet ist. Hier ist die Isolierung 34 durch eine Beschichtung 36 und einen Einsatz 40 gebildet. Der Einsatz 40 erstreckt sich in einem Auslassbereich des Luftzufuhrkanals 18 und teilweise in dem Einlasskanal 16. Der Einsatz 40 kann ähnlich wie der Einsatz 40 aus der unter Bezug auf die Figur 4 beschriebenen Ausführungsform hergestellt und positioniert werden. Der Einsatz 40 kann insbesondere so ausgebildet sein, dass er einen Kontaktbereich zwischen dem Zylinderkopf 10 und dem Luftzufuhrrohrstück 12 zum Abdichten überdeckt (nicht dargestellt).

In einigen Ausführungsformen kann die Wärmeisolierung 34 zusätzlich im Einlasskanal 16 eine Beschichtung einer Innenwandfläche des Einlasskanals 16 und/oder einen an einer Innenwandfläche des Einlasskanals 16 anliegenden Einsatz aufweisen.

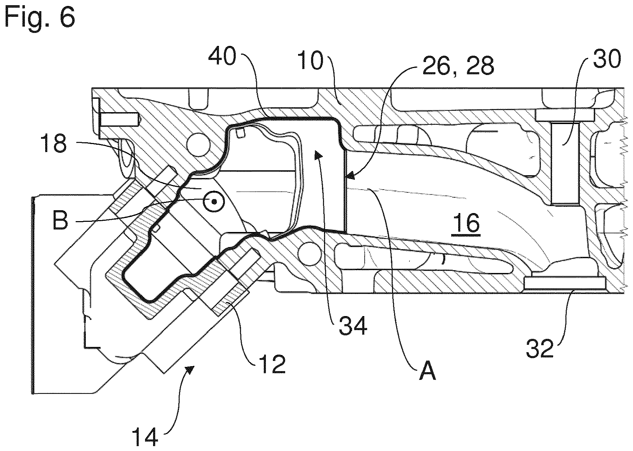

Die Figur 6 zeigt ein weiteres Ausführungsbeispiel, bei dem die Wärmeisolierung 34 durch einen im Luftzufuhrkanal 18 angeordneten Einsatz 40 ausgebildet ist. In der gezeigten Ausführungsform ist das Luftzufuhrrohrstück 12 lediglich als eine Art Deckel vorgesehen, der an den Zylinderkopf 10 angeschraubt ist. Der Luftzufuhrkanal 18 wird größtenteils von dem Zylinderkopf 10 ausgebildet. Der Einsatz 40 kann beispielsweise durch die Brennraumöffnung 32 oder eine Eintrittsöffnung des Luftzufuhrkanals 18 eingeführt und im Luftzufuhrkanal 18 bei einem bereits montierten Luftzufuhrrohrstück 12 entfaltet werden.

Fachleute werden erkennen, dass die hierin offenbarten Lufteinlasssysteme verschiedene Verfahren zur Herstellung nutzen können, die je nach Ausbildung der Wärmeisolierung kombinierbar sind.

In einer Ausführungsform, in der das Luftzufuhrrohrstück an den Zylinderkopf angegossen ist und die Wärmeisolierung 34 den Einsatz 40 aufweist (siehe Figur 4), kann der Einsatz 40 durch die Brennraumöffnung 32 oder die Eintrittsöffnung 24 in den Luftzufuhrkanal 18 eingeführt werden. Dazu wird der Einsatz 40 vor dem Einführen gefaltet. Im Luftzufuhrkanal 18 wird der Einsatz 40 entfaltet. Der Einsatz 40 legt sich dann mit seiner angepassten Außenkontur an die Innenkontur des Luftzufuhrkanals 18 an.

In einem Ausführungsbeispiel, in der das Luftzufuhrrohrstück 12 an den Zylinderkopf 10 montiert ist und die Wärmeisolierung 34 den Einsatz 40 aufweist (siehe beispielsweise Figur 6), kann der Einsatz 40 vor oder nach dem Montieren des Luftzufuhrrohrstücks 12 an den Zylinderkopf 10 im Luftzufuhrkanal 18 angeordnet werden. Insbesondere in Ausführungsformen, in denen der Luftzufuhrkanal 18 vollständig oder hauptsächlich in dem Luftzufuhrrohrstück 12 ausgebildet ist, kann der Einsatz 40 vor der Montage des Luftzufuhrrohrstücks 12 an den Zylinderkopf 10 in das Luftzufuhrrohrstück 12 eingelegt werden. In Ausführungsformen (siehe beispielsweise Figur 6), in dem der Luftzufuhrkanal 18 zwischen dem Luftzufuhrrohrstück 12 und dem Zylinderkopf 10 ausgebildet ist, kann der Einsatz 40 vorzugsweise nach der Montage das Luftzufuhrrohrstück 12 an den Zylinderkopf 10 durch die Brennraumöffnung 32 oder die Eintrittsöffnung 24 eingeführt werden.

In einer Ausführungsvariante, in der das Luftzufuhrrohrstück 12 an den Zylinderkopf 10 montiert ist und die Wärmeisolierung 34 die Beschichtung 36 aufweist (siehe beispielsweise Figur 3), kann die Beschichtung 36 insbesondere vor dem Montieren des Luftzufuhrrohrstücks 12 aufgebracht werden.

### Bezugszeichenliste

- 10: Zylinderkopf
- 12: Luftzufuhrrohrstück (Luftzufuhrverteilerrohr)
- 14: Lufteinlasssystem
- 16: Einlasskanal
- 18: Luftzufuhrkanal
- 20: Schraubenbohrungen
- 22: Aufnahmebohrungen
- 24: Eintrittsöffnung des Luftzufuhrkanals
- 26: Auslassöffnung des Luftzufuhrkanals
- 28: Einlassöffnung des Einlasskanals
- 30: Aufnahme für Hubventil
- 32: Brennraumöffnung
- 34: Wärmeisolierung
- 36: Beschichtung
- 38: Innenwandfläche des Luftzufuhrkanals/Luftzufuhrrohrstücks
- 40: Einsatz (Liner)

## Patentansprüche

1. Lufteinlasssystem (14) für einen Verbrennungsmotor, aufweisend:
einen Zylinderkopf (10) mit einem Einlasskanal (16) zum Einleiten von Einlassluft in eine Verbrennungskammer des Verbrennungsmotors;
ein Luftzufuhrrohrstück (12), das mit dem Zylinderkopf (10) verbunden ist und mindestens teilweise einen Luftzufuhrkanal (18), der in den Einlasskanal (16) mündet, ausbildet; und
eine Wärmeisolierung (34), die in dem Luftzufuhrkanal (18) zur Verringerung einer Wärmeübertragung auf die in dem Luftzufuhrkanal (18) strömende Einlassluft angeordnet ist,
**dadurch gekennzeichnet, dass**
die Wärmeisolierung (34) einen Einsatz (40), insbesondere einen Liner, aufweist, der an einer Innenwandfläche des Luftzufuhrkanals (18) anliegt.

2. Lufteinlasssystem (14) nach Anspruch 1, wobei das Luftzufuhrrohrstück (12) und die Wärmeisolierung (34) aus unterschiedlichen Materialien hergestellt sind, wobei das Luftzufuhrrohrstück (12) insbesondere aus einer Metalllegierung, vorzugsweise einer Aluminiumlegierung, hergestellt ist und die Wärmeisolierung (34) insbesondere aus einem Kunststoff, einem Gummi und/oder einem Silikon hergestellt ist.

3. Lufteinlasssystem (14) nach Anspruch 1 oder Anspruch 2, wobei die Wärmeisolierung (34) eine Wärmeleitfähigkeit kleiner als 1 W/(m·K), insbesondere kleiner als 0,5 W/(m·K), vorzugsweise kleiner als 0,1 W/(m·K), aufweist.

4. Lufteinlasssystem (14) nach einem der vorherigen Ansprüche, wobei:
das Luftzufuhrrohrstück (12) an den Zylinderkopf (10) montiert, insbesondere angeschraubt, ist; oder
das Luftzufuhrrohrstück (12) und der Zylinderkopf (10) integral miteinander aus einem Stück ausgebildet sind, und insbesondere ein integrales Gussteil bilden.

5. Lufteinlasssystem (14) nach einem der vorherigen Ansprüche, wobei der Einsatz (40) eine Klebeschicht zum Ankleben des Einsatzes (40) an die Innenwandfläche des Luftzufuhrkanals (18) aufweist.

6. Lufteinlasssystem (14) nach einem der vorherigen Ansprüche, wobei:
der Einsatz (40) als ein flexibler, insbesondere faltbarer, Einsatz (40) ausgebildet ist und/oder durch ein 3D-Druckverfahren hergestellt ist; und/oder
der Einsatz (40) zusätzlich als eine Dichtung an einem Übergang zwischen dem Luftzufuhrrohrstück (12) und dem Zylinderkopf (10) wirkend vorgesehen ist.

7. Lufteinlasssystem (14) nach einem der vorherigen Ansprüche, wobei die Wärmeisolierung (34) eine Beschichtung (36) aufweist, die auf eine Innenwandfläche (38) des Luftzufuhrkanals (18) vorzugsweise durch ein Aufspritzverfahren aufgebracht ist.

8. Lufteinlasssystem (14) nach einem der vorherigen Ansprüche, wobei die Wärmeisolierung (34) zusätzlich dazu ausgebildet ist, ein Ansauggeräusch, das im Betrieb des Verbrennungsmotors im Luftansaugkanal (18) auftritt, zu dämpfen und/oder den Ansaugkanal akustisch zu dämmen.

9. Lufteinlasssystem (14) nach einem der vorherigen Ansprüche, wobei:
die Wärmeisolierung (34) zusätzlich in dem Einlasskanal (16) angeordnet ist; und
die Wärmeisolierung (34) im Einlasskanal (16) eine Beschichtung (36) einer Innenwandfläche (38) des Einlasskanals (16) und/oder einen an der Innenwandfläche (38) anliegenden, insbesondere flexiblen, vorzugsweise faltbaren, Einsatz (40), beispielsweise einen Liner, aufweist.

10. Lufteinlasssystem (14) nach einem der vorherigen Ansprüche, wobei:
der Einlasskanal (16) gekrümmt ist; und/oder
der Luftzufuhrkanal (18) im Wesentlichen gradlinig verläuft; und/oder
der Luftzufuhrkanal (18) als ein Luftzufuhrverteilungskanal mit einer Mehrzahl von Auslässen (26) für eine Mehrzahl von Einlasskanälen (16) ausgebildet ist; und/oder
das Luftzufuhrrohrstück (12) als tragendes Element und/oder als ein Gussteil, insbesondere ein Metallgussteil, zum Anmontieren eines oder mehrerer Komponenten des Verbrennungsmotors ausgebildet ist.

11. Lufteinlasssystem (14) nach einem der vorherigen Ansprüche, wobei:
der Zylinderkopf (10) den Luftzufuhrkanal (18) teilweise ausbildet, wobei der Zylinderkopf (10) insbesondere einen in den Einlasskanal (16) mündenden Auslassbereich des Luftzufuhrkanals (18) ausbildet; oder
das Luftzufuhrrohrstück (12) den Luftzufuhrkanal (18) vollständig ausbildet.

12. Lufteinlasssystem (14) nach einem der vorherigen Ansprüche, wobei:
die Wärmeisolierung (34) und das Luftzufuhrrohrstück (12) eine gemeinsame Wandstärke (d) des Luftzufuhrkanals (18) definieren; und
die Wärmeisolierung (34) eine Wandstärke (d₁) in einem Bereich kleiner als 50 % der gemeinsamen Wandstärke (d), insbesondere zwischen 30% und 40 % der gemeinsamen Wandstärke (d), aufweist.

13. Kraftfahrzeug, insbesondere Nutzfahrzeug, mit einem Lufteinlasssystem (14) nach einem der vorherigen Ansprüche.

14. Verfahren zur Herstellung eines Lufteinlasssystems (14) eines Verbrennungsmotors, aufweisend:
Gießen eines Zylinderkopfes (10) mit einem Einlasskanal (16) und einem angegossenen Luftzufuhrrohrstück (12), das mit dem Zylinderkopf (10) einen Luftzufuhrkanal (18), der in den Einlasskanal (16) mündet, ausbildet, wobei der Einlasskanal (16) eine Brennraumöffnung (32) aufweist und der Luftzufuhrkanal (18) eine Eintrittsöffnung (24) aufweist,
**gekennzeichnet durch:**
Einführen einer Wärmeisolierung (34), die einen gefalteten Einsatz (40), insbesondere einen Liner, aufweist, durch die Brennraumöffnung (32) oder die Eintrittsöffnung (24) in den Luftzufuhrkanal (18); und
Entfalten des Einsatzes (40) in dem Luftzufuhrkanal (18), sodass der Einsatz (40) sich an eine Innenwandfläche (38) des Luftzufuhrkanals (18) anlegt.

15. Verfahren zur Herstellung eines Lufteinlasssystems (14) eines Verbrennungsmotors, aufweisend:
Gießen eines Luftzufuhrrohrstücks (12) zum Montieren an einen Zylinderkopf (10), sodass ein mindestens teilweise durch das Luftzufuhrrohrstück (12) gebildeter Luftzufuhrkanal (18) in einen Einlasskanal (16) des Zylinderkopfes (10) mündet,
**gekennzeichnet durch:**
Einlegen oder Einführen eines Einsatzes (40), insbesondere eines Liner, als eine Wärmeisolierung (34) in den Luftzufuhrkanal (18); und
Montieren des Luftzufuhrrohrstücks (12) an den Zylinderkopf (10).

## Claims

1. Air inlet system (14) for an internal combustion engine having:
a cylinder head (10) having an inlet channel (16) for introducing inlet air into a combustion chamber of the internal combustion engine;
an air supply pipe piece (12), which is connected to the cylinder head (10) and which at least partially forms an air supply channel (18), which opens in the inlet channel (16); and
thermal insulation (34), which is arranged in the air supply channel (18) in order to reduce a heat transfer to the inlet air which flows in the air supply channel (18),
**characterized in that**
the thermal insulation (34) has an inlay (40), in particular a liner, which abuts an inner wall face of the air supply channel (18).

2. Air inlet system (14) according to Claim 1, wherein the air supply pipe piece (12) and the thermal insulation (34) are produced from different materials, wherein the air supply pipe piece (12) is produced in particular from a metal alloy, preferably an aluminium alloy, and the thermal insulation (34) is produced in particular from a plastics material, a rubber and/or a silicone.

3. Air inlet system (14) according to Claim 1 or Claim 2, wherein the thermal insulation (34) has a thermal conductivity less than 1 W/(m·K), in particular less than 0.5 W/(m·K), preferably less than 0.1 W/(m·K).

4. Air inlet system (14) according to any one of the preceding claims, wherein:
the air supply pipe piece (12) is mounted on the cylinder head (10), in particular screwed on; or
the air supply pipe piece (12) and the cylinder head (10) are constructed integrally with each other from one piece, and in particular form an integral cast component.

5. Air inlet system (14) according to any one of the preceding claims, wherein the inlay (40) has an adhesive layer for adhesively bonding the inlay (40) to the inner wall face of the air supply channel (18).

6. Air inlet system (14) according to any of the preceding claims, wherein:
the inlay (40) is constructed as a flexible, in particular foldable, inlay (40) and/or is produced by means of a 3D printing method; and/or
the inlay (40) is additionally provided so as to act as a seal on a transition between the air supply pipe piece (12) and the cylinder head (10).

7. Air inlet system (14) according to any one of the preceding claims, wherein the thermal insulation (34) has a coating (36) which is applied to an inner wall face (38) of the air supply channel (18) preferably by means of an injection method.

8. Air inlet system (14) according to any one of the preceding claims, wherein the thermal insulation (34) is additionally constructed to damp a suction noise which occurs during operation of the internal combustion engine in the air suction channel (18) and/or to acoustically insulate the suction channel.

9. Air inlet system (14) according to any one of the preceding claims, wherein:
the thermal insulation (34) is additionally arranged in the inlet channel (16); and
the thermal insulation (34) in the inlet channel (16) has a coating (36) of an inner wall face (38) of the inlet channel (16) and/or an inlay (40) which abuts the inner wall face (38) and which is in particular flexible, preferably foldable, for example, a liner.

10. Air inlet system (14) according to any one of the preceding claims, wherein:
the inlet channel (16) is curved; and/or
the air supply channel (18) extends in a substantially linear manner; and/or
the air supply channel (18) is constructed as an air supply distribution channel with a plurality of outlets (26) for a plurality of inlet channels (16); and/or
the air supply pipe piece (12) is constructed as a load-bearing element and/or as a cast component, in particular a metal cast component, for mounting one or more components of the internal combustion engine.

11. Air inlet system (14) according to any one of the preceding claims, wherein:
the cylinder head (10) partially forms the air supply channel (18), wherein the cylinder head (10) forms in particular an outlet region of the air supply channel (18) which opens in the inlet channel (16); or
the air supply pipe piece (12) completely forms the air supply channel (18).

12. Air inlet system (14) according to any one of the preceding claims, wherein:
the thermal insulation (34) and the air supply pipe piece (12) define a common wall thickness (d) of the air supply channel (18); and
the thermal insulation (34) has a wall thickness (d₁) in a range less than 50% of the common wall thickness (d), in particular between 30% and 40% of the common wall thickness (d).

13. Motor vehicle, in particular utility vehicle, having an air inlet system (14) according to any one of the preceding claims.

14. Method for producing an air inlet system (14) of an internal combustion engine, involving:
casting a cylinder head (10) having an inlet channel (16) and a cast air supply pipe piece (12), which with the cylinder head (10) forms an air supply channel (18) which opens in the inlet channel (16), wherein the inlet channel (16) has a combustion chamber opening (32) and the air supply channel (18) has an inlet opening (24),
**characterized by**:
introducing thermal insulation (34) which has a folded inlay (40), in particular a liner, through the combustion chamber opening (32) or the inlet opening (24) into the air supply channel (18); and
unfolding the inlay (40) in the air supply channel (18) so that the inlay (40) is in abutment with an inner wall face (38) of the air supply channel (18).

15. Method for producing an air inlet system (14) of an internal combustion engine, involving:
casting an air supply pipe piece (12) for mounting on a cylinder head (10) so that an air supply channel (18) which is at least partially formed by the air supply pipe piece (12) opens in an inlet channel (16) of the cylinder head (10),
**characterized by**:
placing or introducing an inlay (40), in particular a liner, as thermal insulation (34) in the air supply channel (18); and
mounting the air supply pipe piece (12) on the cylinder head (10).

## Revendications

1. Système d'admission d'air (14) pour un moteur à combustion, comprenant :
une tête de cylindre (10) avec un canal d'admission (16) pour l'introduction d'air d'admission dans une chambre de combustion du moteur à combustion ;
une portion de tube d'alimentation en air (12) qui est reliée avec la tête de cylindre (10) et qui forme au moins partiellement un canal d'alimentation en air (18) qui débouche dans le canal d'admission (16) ; et
une isolation thermique (34) qui est disposée dans le canal d'alimentation en air (18) pour la réduction d'une transmission thermique vers l'air d'admission s'écoulant dans le canal d'alimentation en air (18),
**caractérisé en ce que**
l'isolation thermique (34) comprend un insert (40), plus particulièrement un liner, qui s'appuie contre une surface de paroi interne du canal d'alimentation en air (18).

2. Système d'admission d'air (14) selon la revendication 1, la portion de tube d'alimentation en air (12) et l'isolation thermique (34) étant constituées de matériaux différents, la portion de tube d'alimentation en air (12) étant constituée, plus particulièrement, d'un alliage métallique, de préférence d'un alliage d'aluminium et l'isolation thermique (34) étant constituée, plus particulièrement, d'une matière plastique, d'un caoutchouc et/ou d'un silicone.

3. Système d'admission d'air (14) selon la revendication 1 ou la revendication 2, l'isolation thermique (34) présentant une conductivité thermique inférieure à 1 W/(m·K), plus particulièrement inférieure à 0,5 W/(m·K), de préférence inférieure à 0,1 W/(m·K).

4. Système d'admission d'air (14) selon l'une des revendications précédentes, dans lequel :
la portion de tube d'alimentation en air (12) est montée, plus particulièrement vissée, sur la tête de cylindre (10) ; ou
la portion de tube d'alimentation en air (12) et la tête de cylindre (10) sont formées d'une seule pièce et, plus particulièrement, forment une seule pièce moulée.

5. Système d'admission d'air (14) selon l'une des revendications précédentes, l'insert (40) comprenant une couche adhésive pour le collage de l'insert (40) à la surface de paroi interne du canal d'alimentation en air (18).

6. Système d'admission d'air (14) selon l'une des revendications précédentes, dans lequel :
l'insert (40) est conçu comme un insert (40) flexible, plus particulièrement pliable, et/ou est fabriqué à l'aide d'un procédé d'impression 3D ; et/ou
l'insert (40) est en outre prévu de manière fonctionnelle sous la forme d'un joint d'étanchéité au niveau d'une transition entre la portion de tube d'alimentation en air (12) et la tête de cylindre (10).

7. Système d'admission d'air (14) selon l'une des revendications précédentes, l'isolation thermique (34) comprenant un revêtement (36) qui est appliqué sur une surface de paroi interne (38) du canal d'alimentation en air (18), de préférence à l'aide d'un procédé de pulvérisation.

8. Système d'admission d'air (14) selon l'une des revendications précédentes, l'isolation thermique (34) étant en outre conçue pour amortir un bruit d'aspiration apparaissant, lors du fonctionnement du moteur à combustion, dans le canal d'aspiration d'air (18) et/ou pour amortir de manière acoustique le canal d'aspiration.

9. Système d'admission d'air (14) selon l'une des revendications précédentes, dans lequel :
l'isolation thermique (34) est en outre disposée dans le canal d'admission (16) ; et
l'isolation thermique (34) comprend, dans le canal d'admission (16), un revêtement (36) d'une surface de paroi interne (38) du canal d'admission (16) et/ou un insert (40) notamment flexible, de préférence pliable, s'appuyant contre la surface de paroi interne (38), par exemple un liner.

10. Système d'admission d'air (14) selon l'une des revendications précédentes, dans lequel :
Le canal d'admission (16) est incurvé ; et/ou
le canal d'alimentation en air (18) s'étend globalement en ligne droite ; et/ou
le canal d'alimentation en air (18) est conçu comme un canal de répartition de l'alimentation en air avec une pluralité de sorties (26) pour une pluralité de canaux d'admission (16) ; et/ou
la portion de tube d'alimentation en air (12) est conçue comme un élément porteur et/ou comme une pièce moulée, plus particulièrement une pièce moulée métallique, pour le montage d'un ou plusieurs composants du moteur à combustion.

11. Système d'admission d'air (14) selon l'une des revendications précédentes, dans lequel :
la tête de cylindre (10) forme partiellement le canal d'alimentation en air (18), la tête de cylindre (10) formant plus particulièrement une zone de sortie du canal d'alimentation en air (18) débouchant dans le canal d'admission (16) ; ou
la portion de tube d'alimentation en air (12) forme entièrement le canal d'alimentation en air (18).

12. Système d'admission d'air (14) selon l'une des revendications précédentes, dans lequel :
l'isolation thermique (34) et la portion de tube d'alimentation en air (12) définissent une épaisseur de paroi commune (d) du canal d'alimentation en air (18) ; et
l'isolation thermique (34) présente une épaisseur de paroi (d₁) dans une plage inférieure à 50 % de l'épaisseur de paroi commune (d), plus particulièrement entre 30 % et 40 % de l'épaisseur de paroi commune (d).

13. Véhicule automobile, plus particulièrement véhicule utilitaire, avec un système d'admission d'air (14) selon l'une des revendications précédentes.

14. Procédé de fabrication d'un système d'admission d'air (14) d'un moteur à combustion, comprenant :
le moulage d'une tête de cylindre (10) avec un canal d'admission (16) et une portion de tube d'alimentation en air (12) surmoulée, qui forme, avec la tête de cylindre (10), un canal d'alimentation en air (18), qui débouche dans le canal d'admission (16), le canal d'admission (16) comprenant une ouverture de chambre de combustion (32) et le canal d'alimentation en air (18) comprenant une ouverture d'entrée (24),
**caractérisé par** :
l'introduction d'une isolation thermique (34), qui comprend un insert (40), plus particulièrement un liner, plié, à travers l'ouverture de chambre de combustion (32) ou l'ouverture d'entrée (24), dans le canal d'alimentation en air (18) ; et
le dépliage de l'insert (40) dans le canal d'alimentation en air (18) de façon à ce que l'insert (40) s'appuie contre une surface de paroi interne (38) du canal d'alimentation en air (18).

15. Procédé de fabrication d'un système d'admission d'air (14) d'un moteur à combustion, comprenant :
le moulage d'une portion de tube d'alimentation en air (12) destinée à être montée sur une tête de cylindre (10), de façon à ce qu'un canal d'alimentation en air (18), formé au moins partiellement à travers la portion de tube d'alimentation en air (12), débouche dans un canal d'admission (16) de la tête de cylindre (10),
**caractérisé par** :
l'insertion ou l'introduction d'un insert (40), plus particulièrement d'un liner, en tant qu'isolation thermique (34) dans le canal d'alimentation en air (18) ; et
le montage de la portion de tube d'alimentation en air (12) sur la tête de cylindre (10).
